# EUROPEAN PATENT SPECIFICATION

(11) **EP 0 421 240 B1**
(45) Date of publication and mention of the grant of the patent: **31.01.1996**
(21) Application number: 90118391.3
(22) Date of filing: 25.09.1990
(51) Int. Cl.: G02F 1/1333

(54) **Liquid crystal display element**
Flüssigkristallanzeige
Afficheur à cristal liquide

(30) Priority: 26.09.1989 JP 250922/89; 21.08.1990 JP 220347/90
(43) Date of publication of application: 10.04.1991
(73) Proprietor: SUMITOMO ELECTRIC INDUSTRIES, LTD., Osaka-shi, Osaka 541 (JP)
(72) Inventor: Kajiyama, Tisato, Fukuoka-shi, Fukuoka-ken (JP); Kashiwagi, Tohru, c/o Osaka Works, Konohana-ku, Osaka-shi, Osaka-fu (JP); Takata, Kensaku, c/o Osaka Works, Konohana-ku, Osaka-shi, Osaka-fu (JP)
(74) Representative: Hansen, Bernd, Dr. Dipl.-Chem.

(56) References cited:
- EP-A- 0 004 464
- EP-A- 0 307 114
- JP-A- 6 305 765
- PATENT ABSTRACTS OF JAPAN, vol. 7, no. 175 (C-179) 18 May 1983 ; & JP-A-58 083 044
- RESEARCH DISCLOSURE, no. 292, August 1988, HAVANT GB, page 29892 ; "The Use of Wetting Agents In The Construction Of Polymer Dispersed Liquid Crystal (PDLC) Films"

## Description

### BACKGROUND OF THE INVENTION

### Field of the Invention

The present invention relates to a liquid crystal display element which can be used in a liquid crystal display to be used in a TV set or an office automation equipment such as a word processor or a work station.

### Description of the Related Art

Since a conventional liquid crystal display element is produced by pouring a liquid crystal material between a pair of transparent electrodes which are fixed at a distance of several micrometers, it is very difficult to provide a display having a large area. In addition, since polarized plates having polarization axes in perpendicular directions with each other are attached to respective glass plates in which the liquid crystal is confined, brightness of a faceplate and an angle of visibility are insufficient.

Recently, a liquid crystal display element which is prepared by applying a solution of a matrix polymer and a liquid crystal material in a solvent on a transparent electrode by casting, drying the applied solution to form a polymer/liquid crystal composite film on the electrode and laminating another transparent electrode on the composite film (cf. Polymer Preprints, Japan, Vol. 37, No. 8 (1988) 2450).

EP-A- 4 464 discloses use of an alkyd-type polymeric plasticising resin or castor oil incorporated in a mixture of polyvinyl butyral film forming polymer and a cholesteric liquid crystalline phase material.

In this type of the liquid crystal display element, the composite film comprises the polymeric matrix having a sponge-like structure and the liquid crystal which fills pores of the polymeric matrix. Under a no-voltage condition, liquid crystal molecules are randomly oriented in the pores so that incident light is scattered and the composite film is opaque. When a voltage is applied between a pair of transparent electrode which sandwich the composite film and a dielectric constant anisotropy: Δε (= ε_{∥} - ε_{┴} wherein ε_{∥} is a dielectric constant in a direction of a molecular axis and ε_{┴} is a dielectric constant in a direction perpendicular to the molecular axis) is positive, the liquid crystal molecules are oriented in a direction of electric field due to an electro-optic effect so that the incident light is not scattered and passes through the composite film, and the composite film becomes transparent.

With the above described liquid crystal display element, it is easy to enlarge the area of liquid crystal display element since the element is prepared by applying and drying the solution of the matrix polymer and the liquid crystal material to form the composite film having the above electro-optic effect. Further, through the selection of a kind of the matrix polymer, flexibility is imparted to the composite film. In addition, since a flexible transparent film to which conductivity is imparted by, for example, forming a transparent conductive film thereon can be used as a transparent electrode, it is possible to impart flexibility to the liquid crystal display element.

A similar liquid crystal display element is commercially available from Taliq Corp. (USA) under a trade name of "NCAP Liquid Crystal".

Since the above liquid crystal display element comprising the composite film has insufficient response to an applied voltage, it has various drawbacks that its speed of response is low and that variation of transmittance is small. Then, it is difficult to use such liquid crystal display element in a matrix driving type liquid crystal display device which is required to have high definition and high response. To achieve sufficient variation of transmittance, a driving voltage should be increased, and therefore peripheral equipments should be made resistant to high voltage.

### SUMMARY OF THE INVENTION

One object of the present invention is to provide a liquid crystal display element with a high response to applied voltage.

Another object of the present invention is to provide a method for producing a liquid crystal display element with a high response to applied voltage.

According to a first aspect of the present invention, there is provided a liquid crystal display element as claimed in claim 1.

According to a second aspect of the present invention, there is provided a method of producing a liquid crystal display element as claimed in claim 9.

### BRIEF DESCRIPTION OF THE DRAWINGS

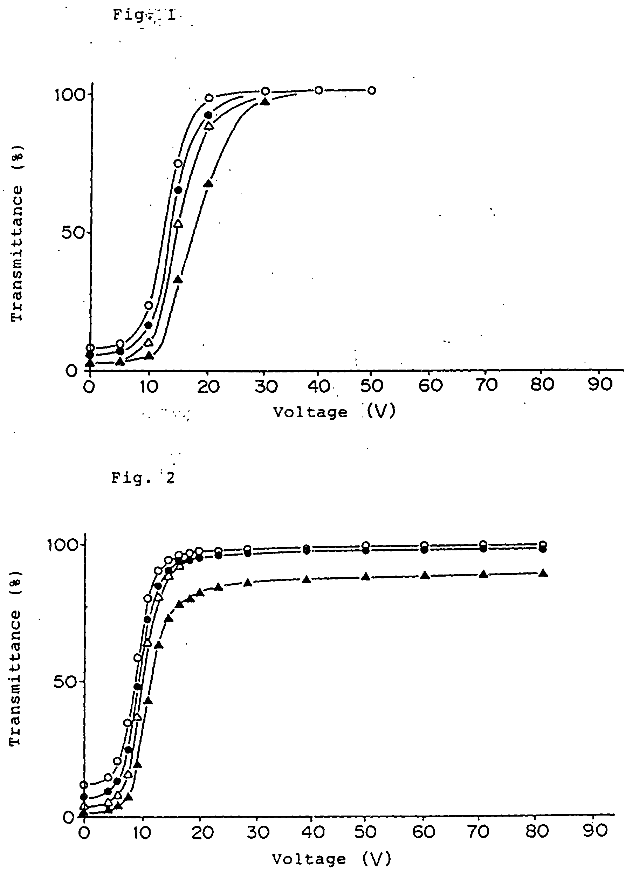

Figs. 1, 2 and 3 are graphs showing relationships between applied voltage and transmittance of the liquid crystal display elements produced in Example 1, Example 2 and Comparative Example 1, respectively.

### DETAILED DESCRIPTION OF THE DRAWINGS

To overcome the drawbacks of the liquid crystal display element of the prior art, a relationship between an amount of a liquid component which remains in the polymer matrix/liquid crystal composite film and response of the liquid crystal to the applied voltage was examined. In the conventional composite film, the response of the liquid crystal to the applied voltage decreases as a drying time for forming the composite film is prolonged, and a voltage required for driving tends to increase. Causes for this were investigated and it was found that when a solvent for a coating liquid remains in a larger amount in the composite film, the response of the liquid crystal becomes larger. However, the solvent used in the prior art is a low-boiling liquid which does not remain in the dried composite film. Although it is possible to remain a larger amount of the solvent by shortening the drying time for forming the composite film, the remained solvent gradually evaporates and finally no solvent is contained in the composite film, thereby the response of the liquid crystal is deteriorated as time passes.

As the result of further study by the present inventor, it has been found that the response of the liquid crystal is not deteriorated when a high-boiling liquid which hardly evaporates from the composite film during or after formation of the composite film is added to the composite film.

Accordingly, the composite film in the liquid crystal display element of the present invention contains 1 to 30 % by weight of the high-boiling liquid based on the weight of the liquid crystal.

As the liquid crystal to be contained in the composite film according to the present invention, a nematic liquid crystal such as a twisted nematic (TN) liquid crystal is used. More preferably, the liquid crystal has a larger positive dielectric constant anisotropy Δε to obtain the display element having good characteristics.

As the matrix polymer which is one of the components of the composite film acrylic or methacrylic resins such as polymethyl methacrylate are used.

Together with the matrix polymer, an adhesive or tackifying polymer may be used to improve adhesion of the composite film to the transparent electrodes, to prevent displacement or delamination of the electrodes from the composite film and/or to make it easier to enlarge the area of the display element. As the adhesive or tackifying polymer, one having good compatibility with the matrix polymer is preferable. As acrylic resin is used as the matrix polymer, an acrylic adhesive or tackifying polymer is preferably used. Insofar as requirements for the production of the liquid crystal display element of the present invention are satisfied, any adhesive or tackifying polymer or any combination of the adhesive or tackifying polymer and the matrix polymer may be used.

The high-boiling liquid to be contained in the composite film comprising the liquid crystal and the matrix polymer has a boiling point of not lower than 150°C, preferably not lower than 300°C under atmospheric pressure. When the boiling point of the high-boiling liquid is lower than 150°C, the liquid gradually evaporates off from the composite film during the use of the display element so that the response of the liquid crystal is inevitably deteriorated during long term use. Preferably, the high-boiling liquid does not freeze at a temperature of -30 to 0°C according to surrounding environments.

Any liquid having a boiling point of not lower than 150°C may be used in the present invention. Preferably, plasticizers which are generally used as plasticizers for the polymer are used since they have no adverse effect on the matrix polymer or the liquid crystal and are easily available and economical. Depending on the kinds, alcohols, aldehydes, amines, strong acids or strong alkalis are not preferred since they have adverse effects on the matrix polymer or the liquid crystal and have poor stability.

In view of the objects of the present invention, namely decrease of the viscosity of the crystal phase and increase of the response of the liquid crystal, the high-boiling liquid is preferably contained in the liquid crystal phase in a larger amount than in the matrix polymer having a sponge-like structure. When the high-boiling liquid is contained in the matrix polymer having the sponge-like structure in a larger amount, the strength of the composite film is decreased.

To have the high-boiling liquid contained in the liquid crystal phase in a larger amount than in the matrix polymer, the high-boiling liquid having better compatibility with the liquid crystal than with the matrix polymer is used. For example, when the acrylic resin is used as the matrix polymer and the TN type nematic liquid crystal is used as the liquid crystal, plasticizers which have good compatibility with the nematic liquid crystal but poor compatibility with the acrylic resin (for example, di-2-ethylhexyl phthalate, diisodecyl phthalate, di-2-ethylhexyl azelate and the like) are used independently or as a mixture.

The content of the high-boiling liquid in the composite film is from 1 to 30 % by weight, preferably 5 to 20 % by weight, more preferably about 10 % by weight based on the weight of the liquid crystal.

When the content of the high-boiling liquid is less than 1 % by weight, the response of the liquid crystal to the applied voltage cannot be improved. When said content exceeds 30 % by weight, the response of the liquid crystal is deteriorated. In addition, opacity of the liquid crystal, namely a scattering degree of the light is decreased when no voltage is applied, and no clear display is achieved. Decrease of the response and the opacity may be due to excessive dilution of the liquid crystal with the high-boiling liquid.

To obtain a color liquid crystal display element, a dye may be added to the composite film.

A thickness of the composite film should be larger than a wavelength of the visible light to give a light-scattering type liquid crystal display element. When the thickness of the composite film is too larger, the driving voltage of the element becomes large. In practical, the thickness of the composite film is from 20 to 30 µm.

As the transparent electrodes which sandwich the composite film, an electrode comprising a transparent support such as a glass plate or a plastic film (e.g. polyethylene terephthalate (PET), polyethersulfone (PES), etc.) on which a conductive film such as ITO (indium/tin oxides) or SnO₂ is formed by vapor deposition or sputtering can be used. Alternatively, a transparent conductive glass or film may be used as the electrode.

The liquid crystal display element of the present invention may be prepared by various methods. For example, the high-boiling liquid having the boiling point of not lower than 150°C, the matrix polymer and the liquid crystal are mixed with the low-boiling solvent having the boiling point of lower than 150°C to prepare a coating liquid. Then, the coating liquid is applied on one transparent electrode, dried and solidified at a temperature lower than the boiling point of the high-boiling liquid to form the composite film. According to this process of the present invention, the liquid crystal display element having good response to the applied voltage can be produced by substantially the same process as the conventional process without increasing the number of the production steps. That is, the coating liquid is applied on one of the pair of transparent electrodes, dried and consolidated to from the composite film, and the other electrode is laminated on the formed composite film and thermally treated to produce the liquid crystal display element of the present invention.

The low-boiling solvent is selected from various solvents having a boiling point of lower than 150°C according to the kinds of the matrix polymer, the liquid crystal and the high-boiling liquid to be dissolved or dispersed in the solvent.

As the low-boiling solvent, one that has a boiling point as low as possible and is easily evaporated (with a high vapor pressure) is preferably used because if the low-boiling solvent is not easily evaporated and it takes long time to dry and solidify the applied coating liquid, a structure in which the liquid crystal is suitably dispersed in the sponge-like structure of the matrix polymer is not well formed.

Amounts of the components to be added to the low-boiling solvent are not critical in the present invention and depend on a manner for applying the coating liquid on the transparent electrode, the thickness of the composite film to be formed, and the like.

The coating liquid can be applied on the transparent electrode by a conventional method such as bar coating, spray coating, roll coating, flow coating, and the like.

### PREFERRED EMBODIMENTS OF THE INVENTION

The present invention will be explained by following Examples, in which "parts" and "%" are by weight unless otherwise indicated.

### Example 1

A polymer mixture of 80 parts of polymethyl methacrylate (Delpet, a trade mark of Asahi Chemical) as a matrix polymer and 20 parts of an acrylic tackifying polymer (manufactured by Teikoku Kagaku) and a liquid crystal (Type E 63 distributed by Merck Japan) in a weight ratio of the liquid crystal to the polymer mixture of 6:4 were dissolved in dichloromethane as a low-boiling solvent to a total solute concentration of 15 %. To the resulting solution, di-2-ethylhexyl azelate (DOZ) as a high-boiling liquid was added in an amount of 10 % based on the weight of the liquid crystal to prepare a coating liquid.

The coating liquid was then coated on a transparent conductive film (ITO-polyethersulfone film having a thickness of 100 µm) with a bar, dried at room temperature for 30 minutes and then at 80°C for 30 minutes to form a composite film having a thickness of 30 µm.

On the formed composite film, the same transparent conductive film as above was laminated and heated at 80°C for 10 minutes to obtain a liquid crystal display element.

### Example 2

A polymer mixture of 80 parts of polymethyl methacrylate (Delpet, a trade mark of Asahi Chemical) as a matrix polymer and 20 parts of an acrylic tackifying polymer (manufactured by Teikoku Kagaku) and a liquid crystal (Type E 63 distributed by Merck Japan) in a weight ratio of the liquid crystal to the polymer mixture of 6:4 were dissolved in chloroform as a low-boiling solvent to a total solute concentration of 20 %. To the resulting solution, diisodecyl phthalate (DIDP) as a high-boiling liquid was added in an amount of 13 % based on the weight of the liquid crystal to prepare a coating liquid.

The coating liquid was then coated on a transparent conductive film (ITO-polyethersulfone film having a thickness of 100 vm) with a bar, dried at room temperature for 30 minutes and then at 70°C for 30 minutes to form a composite film having a thickness of 20 µm.

On the formed composite film, the same transparent conductive film as above was laminated and heated at 70°C for 10 minutes to obtain a liquid crystal display element.

### Comparative Example 1

In the same manner as in Example 1 but using np DOZ, a coating liquid was prepared.

The coating liquid was then coated on a transparent conductive film (ITO-polyethersulfone film having a thickness of 100 µm) with a bar, dried at room temperature for 30 minutes to form a composite film having a thickness of 30 µm.

On the formed composite film, the same transparent conductive film as above was laminated and heated at 80°C for 10 minutes to obtain a liquid crystal display element.

### Electro-optic response test

Each liquid crystal display element was set in a spectrophotometer (Type UV-160 manufactured by Shimadzu) and a sinusodial wave alternating current of 60 Hz was applied between the transparent electrodes to measure a relationship between the applied voltage and transmittance of light having various wavelengths. The results for Example 1, Example 2 and Comparative Example 1 are shown in Figs. 1, 2 and 3, respectively.

In Figs. 1, 2 and 3, the transmittance represents values corrected for absorbance through a pair of the transparent electrodes, and the voltage (V) represents the effective voltage between the transparent electrodes. White circles, black circles, white triangles and black triangles represent the data for light having wavelengths of 700 nm, 600 nm, 500 nm and 400 nm, respectively.

From the results of Fig. 3, it is understood that the liquid crystal display element produced in Comparative Example 1 showed dull change of transmittance with the change the applied voltage and required the higher voltage to increase the transmittance. The transmittance varied largely according to the wavelengths of the light. In particular, change of the transmittance of the light having a shorter wavelength was insufficient, and no sufficient transmittance was achieved up to the applied voltage of 90 V.

On the contrary, from the results of Fig. 1, it is understood that the liquid crystal display element produced in Example 1 showed sharp change of the transmittance with the change of the applied voltage. In addition, the difference of the transmittance between the wavelengths, and only at the applied voltage of 30 V, the transmittance was 100 % over the whole range of visible light.

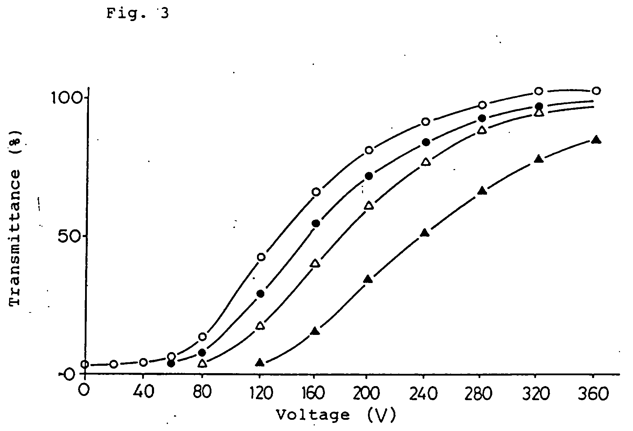

From the results of Fig. 2, it is understood that, in the liquid crystal display element produced in Example 2, the change of transmittance was sharper than the element produced in Example 1, and at the applied voltage of 20 V, the transmittance was 100 % except at the wavelength of 400 nm.

### Example 3

In the same manner as in Example 1 but using 1 % of DOZ based on the weight of the liquid crystal, a liquid crystal display element was produced and its electro-optic response was tested as in Example 1. At the applied voltage of 270 V, sufficient transmittance was achieved.

### Example 4

In the same manner as in Example 1 but using 30 % of DOZ based on the weight of the liquid crystal, a liquid crystal display element was produced and its electro-optic response was tested as in Example 1. The results were substantially the same as those in Example 1. But, in the applied voltage range of 5 V or lower, the transmittance was slightly improved.

### Comparative Example 2

In the same manner as in Example 1 but using 50 % of DOZ based on the weight of the liquid crystal, a liquid crystal display element was produced and its electro-optic response was tested as in Example 1. The element did not respond to any applied voltage and the transmittance did not change.

### Comparative Example 3

In the same manner as in Example 1 but using 0.1 % of DOZ based on the weight of the liquid crystal, a liquid crystal display element was produced and its electro-optic response was tested as in Example 1. The results were substantially the same as in Comparative Example 1 in which no DOZ was used.

## Claims

1. A liquid crystal display element comprising a pair of transparent electrodes and a composite film interposed between said pair of transparent electrodes which film comprises a matrix polymer selected from acrylic resins and methacrylic resins, a nematic liquid crystal and a high-boiling liquid having a boiling point of not lower than 150°C under atmospheric pressure in an amount of 1 to 30 % by weight based on the weight of liquid crystal.

2. The liquid crystal display element according to Claim 1, wherein said high-boiling liquid is at least one selected from the group consisting of di-2-ethylhexyl phthalate, diisodecyl phthalate and di-2-ethylhexyl azelate.

3. The liquid crystal display element according to Claim 2, wherein said nematic liquid crystal is a twisted nematic liquid crystal.

4. The liquid crystal display element according to Claim 1 or 2, wherein said methacrylic resin is polymethyl methacrylate.

5. The liquid crystal display element according to Claim 1, wherein the amount of said high-boiling liquid is about 10 % by weight based on the weight of liquid crystal.

6. The liquid crystal display element according to Claim 1, wherein said high-boiling liquid has a boiling point of not lower than 300°C.

7. The liquid crystal display element according to Claim 1, wherein said composite film further comprises an adhesive polymer.

8. The liquid crystal display element according to Claim 3, wherein said composite film has a thickness of 20 to 30 µm.

9. A method of producing the liquid crystal display element of Claim 1, which comprises the steps of applying a coating liquid comprising a matrix polymer selected from acrylic resins and methacrylic resins and a nematic liquid crystal dissolved or dispersed in a mixture of a solvent having a boiling point lower than 150°C and a high-boiling liquid having a boiling point of not lower than 150°C on a surface of one of a pair of transparent electrodes, drying said applied liquid at a temperature of lower than the boiling point of said high-boiling liquid to form a composite film and laminating the other of said pair of transparent electrodes on said composite film.

## Patentansprüche

1. Flüssigkristall-Anzeigeelement, umfassend ein Paar transparente Elektroden und einen Verbundfilm, der sich zwischen dem Paar der transparenten Elektroden befindet, wobei der Film ein Matrixpolymer, ausgewählt aus Acrylharzen und Methacrylharzen, ein nematisches Flüssigkristall und eine hochsiedende Flüssigkeit mit einem Siedepunkt von nicht niedriger als 150°C unter Atmosphärendruck in einer Menge von 1 bis 30 Gew.-%, bezogen auf das Gewicht des Flüssigkristalls, umfaßt.

2. Flüssigkristall-Anzeigeelement gemäß Anspruch 1, in welchem die hochsiedende Flüssigkeit wenigstens eine ist, ausgewählt aus der Gruppe bestehend aus Di-2-ethylhexylphathalat, Di-isodecylphthalat und Di-2-ethylhexylacelat.

3. Flüssigkristall-Anzeigeelement gemäß Anspruch 2, in welchem das nematische Flüssigkristall ein getwistetes nematisches Flüssigkristall ist.

4. Flüssigkristall-Anzeigeelement gemäß Anspruch 1 oder 2, in welchem das Methacrylsäureharz Polymethylmethacrylat ist.

5. Flüssigkristall-Anzeigeelement gemäß Anspruch 1, in welchem die Menge der hochsiedenden Flüssigkeit etwa 10 Gew.-%, bezogen auf das Gewicht des Flüssigkristalls beträgt.

6. Flüssigkristall-Anzeigeelement gemäß Anspruch 1, in welchem die hochsiedende Flüssigkeit einen Siedepunkt von nicht niedriger als 300°C hat.

7. Flüssigkristall-Anzeigeelement gemäß Anspruch 1, in welchem der Verbundfilm weiterhin einen polymeren Kleber umfaßt.

8. Flüssigkristall-Anzeigeelement gemäß Anspruch 3, in welchem der Verbundfilm eine Dicke von 20 bis 30/um hat.

9. Verfahren zum Herstellen des Flüssigkristall-Anzeigeelements gemäß Anspruch 1, umfassend die Stufen des Aufbringens einer Überzugsflüssigkeit, umfassend ein Matrixpolymer, ausgewählt aus Acrylharzen und Methacrylharzen, und ein nematisches Flüssigkristall, gelöst oder dispergiert in einer Mischung aus einem Lösungsmittel mit einem Siedepunkt von niedriger als 150°C und einer hochsiedenden Flüssigkeit mit einem Siedepunkt von nicht weniger als 150°C, auf die Oberfläche einer von einem Paar von transparenten Elektroden, Trocknen der aufgetragenen Flüssigkeit bei einer Temperatur, die niedriger ist als der Siedepunkt der hochsiedenden Flüssigkeit, unter Ausbildung eines Verbundfilms und Laminieren der anderen Elektrode aus dem Elektrodenpaar auf den Verbundfilm.

## Revendications

1. Elément d'affichage à cristaux liquides comprenant une paire d'électrodes transparentes et un film composite interposé entre ladite paire d'électrodes transparentes, lequel film comprend un polymère de matrice choisi parmi des résines acryliques et des résines méthacryliques, des cristaux liquides nématiques et un liquide à point d'ébullition élevé présentant un point d'ébullition non inférieur à 150°C à la pression atmosphérique selon une quantité de 1 à 30% en poids sur la base du poids des cristaux liquides.

2. Elément d'affichage à cristaux liquides selon la revendication 1, dans lequel ledit liquide à point d'ébullition élevé est au moins un liquide choisi parmi le groupe comprenant: di-2-éthylhexyl phthalate, diisodécyl phthalate et di-2-éthylhexyl azélate.

3. Elément d'affichage à cristaux liquides selon la revendication 2, dans lequel lesdits cristaux liquides nématiques sont des cristaux liquides nématiques vrillés.

4. Elément d'affichage à cristaux liquides selon la revendication 1 ou 2, dans lequel ladite résine méthacrylique est un méthacrylate de polyméthyle.

5. Elément d'affichage à cristaux liquides selon la revendication 1, dans lequel la quantité dudit liquide à point d'ébullition élevé est d'environ 10% en poids sur la base du poids des cristaux liquides.

6. Elément d'affichage à cristaux liquides selon la revendication 1, dans lequel ledit liquide à point d'ébullition élevé présente un point d'ébullition non inférieur à 300°C.

7. Elément d'affichage à cristaux liquides selon la revendication 1, dans lequel ledit film composite comprend en outre un polymère adhésif.

8. Elément d'affichage à cristaux liquides selon la revendication 3, dans lequel ledit film composite présente une épaisseur comprise entre 20 et 30 µm.

9. Procédé de fabrication d'un élément d'affichage à cristaux liquides selon la revendication 1, lequel comprend les étapes d'application d'un liquide de revêtement comprenant un polymère de matrice choisi parmi des résines acryliques et des résines méthacryliques et des cristaux liquides nématiques dissous ou dispersés dans un mélange d'un solvant présentant un point d'ébullition inférieur à 150°C et d'un liquide à point d'ébullition élevé présentant un point d'ébullition non inférieur à 150°C sur une surface de l'une d'une paire d'électrodes transparentes, de séchage dudit liquide appliqué à une température inférieure au point d'ébullition dudit liquide à point d'ébullition élevé pour former un film composite et de stratification de l'autre de ladite paire d'électrodes transparentes sur ledit film composite.
